# NEW EUROPEAN PATENT SPECIFICATION

(11) **EP 1 847 436 B2**
(45) Date of publication and mention of the opposition decision: **03.10.2018**
(45) Mention of the grant of the patent: 10.12.2008
(21) Application number: 06112898.9
(22) Date of filing: 21.04.2006
(51) Int. Cl.: B62B 3/06

(54) **Pallet truck**
Gabelhubwagen
Transpalette

(43) Date of publication of application: 24.10.2007
(73) Proprietor: Toyota Material Handling Europe AB, 595 81 Mjölby (SE)
(72) Inventor: Carlson, Magnus, 590 47 Vikingstad (SE); Karlsson, Rolf-Inge, 590 19 Mjölby (SE)
(74) Representative: Zacco Sweden AB

(56) References cited:
- EP-A- 0 383 254
- WO-A-2004/054866
- DD-A1- 43 406
- DE-A1- 3 522 866
- DE-A1- 19 522 456
- DE-U- 1 969 912
- DE-U- 1 969 914
- US-A- 3 622 123

## Description

### FIELD OF THE INVENTION

The present invention relates to a pallet truck according to the preamble of claim 1, such as for example shown by DE 19 699 14.

### BACKGROUND OF THE INVENTION

For pallet trucks the direction of travel is normally controlled by an operator by manoeuvring a tiller arm, which pivots the drive wheel and thereby changes the direction of travel. When the pallet truck is electrically driven, a drive motor transmits power to the drive wheel via a gear box containing a gear mechanism.

A prior art solution is to assemble the drive motor, the gear box and the drive wheel together on top of each other and make the whole drive assembly pivotal with respect to the chassis of the pallet truck. The tiller arm is then attached to the drive motor at a point on top of the drive motor, and when the operator manoeuvres the tiller arm the whole drive assembly is pivoted. The electrical drive motor is supplied with power from e.g. a battery pack by means of electrical cables. Thus, the electrical cables must be of excessive lengths to allow the drive assembly to be pivoted.

However, excessive lengths of electrical cables are bulky and require a lot of space. Moreover, when the drive motor is pivoted the electrical cables are bent which may cause operational disturbances.

Moreover, the tiller arm attachment point at the top of the drive motor has to be strong enough to hold and transfer the momentum created through the steering force exerted on the tiller arm. Therefore, the top of the drive motor has to be adapted for this purpose, which makes the drive motor more expensive.

### OBJECT OF THE INVENTION

An object of the present invention is to provide a pallet truck with a facilitated casing of the drive motor and gear box.

### SUMMARY OF THE INVENTION

This object of the invention is achieved by means of a pallet truck as initially defined and having features according to the characterising portion of claim 1.

Since the drive motor is fixedly arranged in the chassis, the gear box and the drive wheel are interconnected and pivotally arranged in the chassis, and the tiller arm is connected to the gear box in such a way that the gear box and the drive wheel together are pivoted when the operator manoeuvres the tiller arm, several advantages are achieved. Firstly, the lengths of the electrical cables which supply the drive motor with power do not have to be excessive, since the drive motor is fixed and stationary with respect to the chassis and therefore do not need to compensate for any pivot motions as in related art solutions. Thus, a less bulky electrical cabling is achieved. Secondly, the electrical cables will for the same reasons not be subjected to bending when the direction of travel of the pallet truck is adjusted. Thus, the risk of operational disturbances is minimised.

The tiller arm is attached to the gear box via a tiller arm bracket, which is mounted to the gear box. Hereby the tiller arm can be easily mounted to the gear box, and the top of the drive motor need not be adapted so it becomes strong enough to hold and transfer the momentum created through the steering force exerted on the tiller arm.

The drive motor is arranged on top of the gear box and the tiller arm bracket comprises a first portion which extends upwards along the side of the drive motor.

The first portion is radially separated from the drive motor to avoid interference with the drive motor, when the gearbox and the drive wheel are pivoted.

The tiller arm bracket comprises a second portion which is connected to the first portion and which extends radially inwards on top of the drive motor.

The second portion comprises a recess for attachment of the tiller arm, and wherein the position of the recess coincides with the motor axis of the drive motor. Hereby an attachment point for the tiller arm is achieved which facilitates casing of the drive motor and the gear box. Thus when the tiller arm is attached at the recess, the size of the opening in the casing need only be as large as it allows the tiller arm to be lead through, since no compensation has to be made for the pivot motion itself.

### BRIEF DESCRIPTION OF THE DRAWINGS

The present invention will now be described with reference to accompanying drawings, on which:
Fig. 1 shows a schematic side view of an electrically driven pallet truck comprising a drive assembly according to the present invention.
Fig. 2 shows a perspective view of the drive assembly in fig. 1.
Fig. 3 shows a side view of the drive assembly in fig. 1.

### DETAILED DESCRIPTION OF A PREFERRED EMBODIMENT

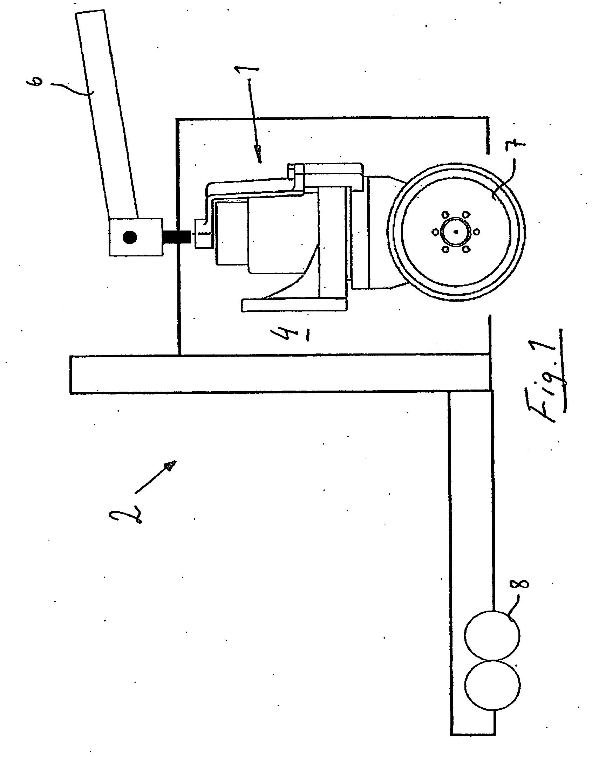

Fig. 1 shows a perspective view of an electrically driven pallet truck 2. The pallet truck comprises a chassis 4 which is supported on the ground by means of front wheels 8 and a rear rotary drive wheel 7. The drive wheel 7 can be pivoted by means of a tiller arm 6, which is manoeuvred by the operator of the pallet truck 2, for adjusting the direction of travel of the pallet truck 2.

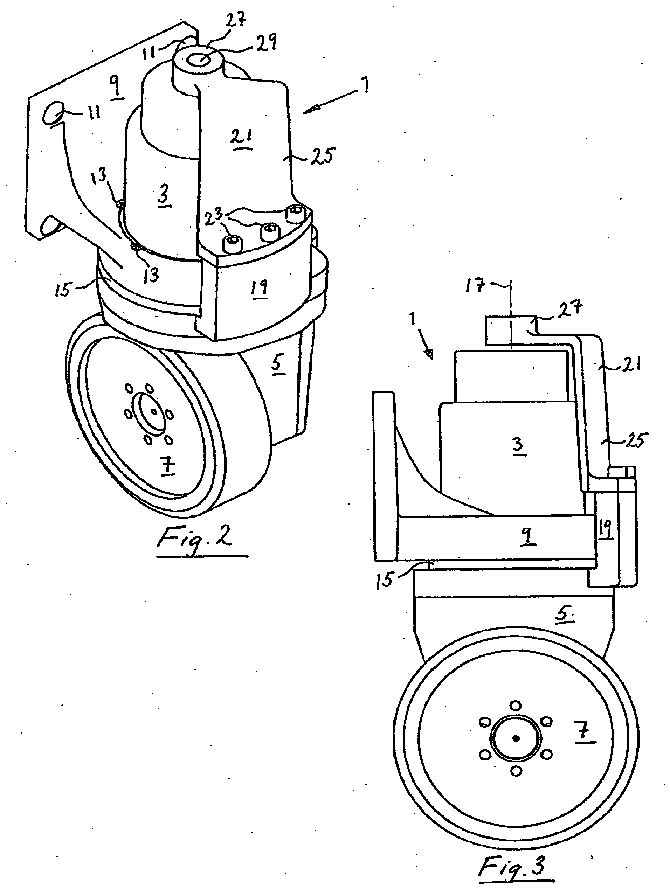

Fig. 2 is a perspective view of a drive assembly 1 for the pallet truck shown in fig. 1. The drive assembly 1 comprises an electrical drive motor 3, a gear box 5 and the rotary drive wheel 7, wherein the electrical drive motor 3 is intended to transmit power to the drive wheel 7 via the gear box 5 for driving of the pallet truck. The electrical drive motor 3 rests in a fastening device 9, which is to be fixedly attached to the chassis 4 of the pallet truck 2 by means of not shown bolts (see holes 11 intended for the bolts). The electrical drive motor 3 is moreover secured in the fastening device 9 by means of screws 13 so that it is fixed and stationary with respect to the chassis 4.

Fig. 3 shows the gear box 5 being attached to the electrical drive motor 3 below the fastening device 9. Between the electrical drive motor 3 and the gear box 5 a guide bearing 15 is arranged so as to allow the gear box 5 to pivot with respect to the electrical drive motor 3, and thus with respect to the chassis 4. The gear box 5 can pivot about a vertical axis 17 which coincides with the motor axis of the electrical drive motor 3.

The gear box 3 comprises a not shown gear mechanism to which the rotary drive wheel 7 is connected to achieve a desired gear ratio. Since the drive wheel 7 is connected to the gear box 5, which is pivotal with respect to the chassis 4 of the pallet truck 2, the drive wheel 7 and the gear box 5 will together pivot about the vertical axis 17. The drive wheel 7 is arranged in the rear end of the pallet truck and rests on the ground so as to support the weight of the pallet truck (together with the front wheels 8). By pivoting the drive wheel 7 (and additional castor wheels on both sides of the drive-wheel (7) if necessary), the direction of travel of the pallet truck can be adjusted.
For pivoting the drive wheel 7 the tiller arm 6 is employed and which is to be manoeuvred by an operator of the pallet truck 2. The tiller arm 6 is attached to an attachment portion 19 forming part of the gear box 5, by means of an elongated tiller arm bracket 21. The tiller arm bracket 21 is attached to the attachment portion 19 by means of a screw joint comprising three socket head cap screws 23. The tiller arm bracket 21 comprises a first portion 25 which extends vertically upwards along, and radially separated from, the electrical drive motor 3 and terminates in a bent second portion 27 being located above, and axially separated from, the electrical drive motor 3. The position of the recess 29 is located so it coincides with the motor axis 17 of the drive motor 3. The second portion 27 comprises a recess 29 to which the tiller arm is to be attached. By providing the tiller arm bracket 21 with such a second portions 27 the drive assembly 1 can be easily enclosed by a not shown shell having an opening for the tiller arm on top of it.

Alternatively, the tiller arm can be attached to the tiller arm bracket 21 at an arbitrary point along the first portion 25, which provides a more flexible choice of vertical attachment points of the tiller arm 6.

Accordingly, when the tiller arm is manoeuvred by the operator, the gear box 5 and the drive wheel 7 is pivoted together, while the electrical drive 3 motor is stationary. Hereby the direction of travel of the pallet truck can be adjusted. With this solution, i.e. with a stationary electrical drive motor 3 and with the tiller arm 6 being attached directly to the gear box 5, the length of the electrical cables which supplies the electrical drive motor 3 with power from a battery pack, need not be excessive. Moreover the electrical cables will not be subjected to bending and therefore operational disturbances will not occur. Additionally the top of the drive motor need not be adapted so it becomes strong enough to hold and transfer the momentum created through the steering force exerted on the tiller arm.

## Claims

1. Pallet truck (2), comprising:
- a chassis (4),
- a drive motor (3) and a gear box (5) arranged in the chassis (4) of the pallet truck (2),
- a drive wheel (7), wherein the drive motor (3) is arranged to transmit power to the drive wheel (7) via the gear box (5) for driving of the pallet truck (2),
- a tiller arm (6) to be manoeuvred by hand by an operator for adjusting the direction of travel of the pallet truck (2),
wherein the drive motor (3) is fixedly arranged in the chassis (4), the gear box (5) and the drive wheel (7) are interconnected and pivotally arranged in the chassis (4), and the tiller arm (6) is connected to the gear box (5) in such a way that the gear box (5) and the drive wheel (7) together are pivoted when the operator manoeuvres the tiller arm (6), wherein
that the tiller arm (6) is attached to the gear box (5) via a tiller arm bracket (21), which is mounted to the gear box (5), wherein the drive motor (3) is arranged on top of the gear box (5), **characterized in that** the tiller arm bracket (21) comprises a first portion (25) which extends upwards along the side of the drive motor (3),
wherein the tiller arm bracket (21) comprises a second portion (27) which is connected to the first portion (25) and which extends radially inwards on top of the drive motor (3), wherein the first portion (25) is radially separated from the drive motor (3) to avoid interference with the drive motor (3) when the gear box (5) and the drive wheel (7) are pivoted, wherein the second portion (27) comprises a recess (29) for attachment of the tiller arm (6), and wherein the position of the recess (29) coincides with the motor axis (17) of the drive motor (3) an attachment point for the tiller arm being hereby achieved which facilitates casing of the drive motor and the gearbox.

## Patentansprüche

1. Hubwagen (2) mit:
- einem Rahmen (4),
- einem Antriebsmotor (3) und einem Getriebe (5), die im Rahmen (4) des Hubwagens (2) angeordnet sind;
- einem Antriebsrad (7), wobei der Antriebsmotor (3) dazu geeignet ist, für einen Antrieb des Hubwagens (2) Kraft über das Getriebe (5) zum Antriebsrad (7) zu übertragen, und
- einer Deichsel (6), die durch eine Bedienungsperson von Hand manövriert wird, um die Fahrtrichtung des Hubwagens (2) einzustellen,
wobei der Antriebsmotor (3) im Rahmen (4) fixiert angeordnet ist, das Getriebe (5) und das Antriebsrad (7) miteinander verbunden und im Rahmen (4) schwenkbar angeordnet sind, und die Deichsel (6) derart mit dem Getriebe (5) verbunden ist, dass das Getriebe (5) und das Antriebsrad (7) gemeinsam geschwenkt werden, wenn die Bedienungsperson die Deichsel (6) manövriert, wobei die Deichsel (6) über einen am Getriebe (5) montierten Deichselhalter (21) am Getriebe (5) befestigt ist, wobei der Antriebsmotor (3) auf der Oberseite des Getriebes (5) angeordnet ist, **dadurch gekennzeichnet, dass** der Deichselhalter (21) einen ersten Abschnitt (25) aufweist, der sich entlang der Seite des Antriebsmotors (3) nach oben erstreckt, wobei der Deichselhalter (21) einen mit dem ersten Abschnitt (25) verbundenen zweiten Abschnitt (27) aufweist, der sich auf der Oberseite des Antriebsmotors (3) radial nach innen erstreckt, wobei der erste Abschnitt (25) vom Antriebsmotor (3) radial beabstandet ist, um eine Wechselwirkung mit dem Antriebsmotor (3) zu vermeiden, wenn das Getriebe (5) und das Antriebsrad (7) geschwenkt werden, wobei der zweite Abschnitt (27) eine Vertiefung (29) zum Befestigen der Deichsel (6) aufweist, und wobei die Position der Vertiefung (29) mit der Motorachse (17) des Antriebsmotors (3) übereinstimmt, wodurch ein Befestigungspunkt für die Deichsel erreicht wird, der die Unterbringung des Antriebsmotors und des Getriebes erleichtert.

## Revendications

1. Transpalette (2) comprenant :
un châssis (4),
un moteur d'entraînement (3) et une boîte de vitesses (5) agencés dans le châssis (4) du transpalette (2),
une roue motrice (7), dans lequel le moteur d'entraînement (3) est agencé pour transmettre une puissance à la roue motrice (7) par l'intermédiaire de la boîte de vitesses (5) pour entraîner le transpalette (2),
un timon (6) destiné à être manoeuvré à la main par un opérateur pour ajuster la direction de déplacement du transpalette (2),
dans lequel le moteur d'entraînement (3) est agencé de manière fixe dans le châssis (4), la boîte de vitesses (5) et la roue motrice (7) sont interconnectées et agencées, de manière pivotante, dans le châssis (4), le timon (6) est raccordé à la boîte de vitesses (5) de sorte que la boîte de vitesses (5) et la roue motrice (7) sont pivotées ensemble lorsque l'opérateur manoeuvre le timon (6), dans lequel :
le timon (6) est fixé à la boîte de vitesses (5) par l'intermédiaire d'un support de timon (21) qui est monté sur la boîte de vitesses (5), dans lequel le moteur d'entraînement (3) est agencé sur le dessus de la boîte de vitesses (5), **caractérisé en ce que** le support de timon (21) comprend une première partie (25) qui s'étend vers le haut le long du côté du moteur d'entraînement (3), dans lequel le support de timon (21) comprend une seconde partie (27) qui est raccordée à la première partie (25) et qui s'étend radialement vers l'intérieur sur le dessus du moteur d'entraînement (3), dans lequel la première partie (25) est radialement séparée du moteur d'entraînement (3) afin d'éviter l'interférence avec le moteur d'entraînement (3) lorsque la boîte de vitesses (5) et la roue motrice (7) sont pivotées, dans lequel la seconde partie (27) comprend un évidement (29) pour fixer le timon (6), et dans lequel la position de l'évidement (29) coïncide avec l'axe de moteur (17) du moteur d'entraînement (3), on obtient ainsi un point de fixation pour le timon qui facilite l'enveloppement du moteur d'entraînement et de la boîte de vitesses.
